# EUROPEAN PATENT SPECIFICATION

(11) **EP 1 037 125 B1**
(45) Date of publication and mention of the grant of the patent: **27.10.2004**
(21) Application number: 00200734.2
(22) Date of filing: 02.03.2000
(51) Int. Cl.: G05B 19/042

(54) **Time scheduling method and schedular for a modular engine**
Zeitplanverfahren und Planer für eine modulare Maschine
Procédé de gestion du temps et planificateur pour une machine modulaire

(30) Priority: 15.03.1999 EP 99200789
(43) Date of publication of application: 20.09.2000
(73) Proprietor: Océ-Technologies B.V., 5914 CC Venlo (NL)
(72) Inventor: Eisenberg, Rolf, 5914 XJ Venlo (NL)
(74) Representative: van Meeteren, Arend Anthonie

(56) References cited:
- EP-A- 0 376 738
- EP-A- 0 747 793
- LATHON R D ET AL: "NEGOTIATION AMONG SCHEDULING AGENTS TO ACHIEVE GLOBAL PRODUCTION GOALS" PROCEEDINGS OF THE INTERNATIONAL CONFERENCE ON SYSTEMS, MAN, AND CYBERNETICS, SAN ANTONIO, OCT. 2 - 5, 1994, vol. 2, 2 October 1994 (1994-10-02), pages 1541-1546, XP000531260 INSTITUTE OF ELECTRICAL AND ELECTRONICS ENGINEERS ISBN: 0-7803-2130-8
- LUETH T C ET AL: "TASK DESCRIPTION, DECOMPOSITION, AND ALLOCATION IN A DISTRIBUTED AUTONOMOUS MULTI-AGENT ROBOT SYSTEM" PROCEEDINGS OF THE IEEE/RSJ/GI INTERNATIONAL CONFERENCE ON INTELLIG ROBOTS AND SYSTEMS: ADVANCED ROBOTICS AND THE REAL WORLD, MUNICH, SEPT. 12 - 16, 1994, vol. 3, 12 September 1994 (1994-09-12), pages 1516-1523, XP000510598 INSTITUTE OF ELECTRICAL AND ELECTRONICS ENGINEERS ISBN: 0-7803-1934-6

## Description

The invention relates to a time scheduling method for a modular processing apparatus, said apparatus including a set of processing modules each for performing a particular processing action, wherein, for a chain of processing actions to be scheduled, interaction between the modules involved in said chain of actions comprises an output object from one processing module being delivered as an input object to another processing module, the processing apparatus comprising at least one processing module for performing a first processing action that does not need an input object from another processing module, the method comprising the allocation of a time to each processing action to be performed by the processing modules on the basis of information on the current status and timing constraints of the respective processing modules. The invention also relates to a scheduler employing this method and to a sheet handling machine, e.g. a copier, scanner or printer including such a scheduler.

It should be noted in this connection, that the term "chain" should not only be interpreted as a flow from one start point to one end point, but also includes several flows coming together or splitting up.

In a modular processing apparatus it is necessary to coordinate the functions of the various processing modules by establishing a time schedule according to which the various processing actions of the modules are to be performed.

US-A-4 737 907 discloses a multiprocessor control system for a xerographic machine having a modular architecture. Each module is controlled by its own processor, and coordination of the various functions is achieved by a master processor communicating with the control processors of the modules via a bus system. Synchronizing signals, among others a machine clock signal, can be applied to the various processors independently from the bus system. Thus, it is possible for the master processor to download instructions to the control processors of the modules, such instructions specifying the action to be performed, an event by which the action is triggered , and a delay time between the triggering event and the moment at which the action has to be performed. This has the advantage that the control processor of the module can autonomously monitor the triggering event and execute the required action at the correct timing, so that the burden on the master processor and the bus system is reduced. The triggering events and the delay times which together establish a time schedule are determined by the master processor.

A scheduling method according to the preamble of claim 1, for a modular print engine, is disclosed in EP-A-0 747 793. The modules of the engine are in this case formed by the various subassemblies of the printer, such as paper storage tray, a sheet feeder, a paper conveyor, a printing device and the like. These modules interact in that a paper sheet is passed through the engine from module to module. The scheduler determines the modules needed for a given task and establishes a sequence of actions on the basis of models representing the functions of the various modules.

In order for the modules to cooperate without timing conflicts, it is generally required that all the timing constraints of the various modules have to be taken into consideration in the scheduler. As a result, the conventional scheduler is relatively complex, and difficulties or errors are likely to occur when the system configuration is changed, i.e. by adding, removing or replacing individual modules.

It is an object of the invention to provide a scheduling method and a scheduler which permit a high variability in the engine configuration and are robust against alterations of this configuration.

According to the invention, this object is achieved by a scheduling method according to the preamble of claim 1 which is characterized in that each processing module sends a timing offer to the processing module to which its process output has to be delivered and receives in reply from that processing module a message accepting or rejecting the timing offer, the timing offer sent being based on the internal status and timing constraints of the sending processing module and, if an input object from another processing module is needed by the sending processing module, on a timing offer received from that other processing module.

The scheduling process is highly decentralized, so that the modules practically act as autonomous entities which negotiate the time schedule among each other. Most importantly, each processing module only needs to have information on its own functionality, status and timing constraints and on the type of interaction with other modules. From the view point of an individual module, the status or the timing constraints of other modules are irrelevant. This has the advantage that the internal configuration of each module may be altered as desired, and it is not necessary to notify these alterations or their consequences to other modules or to a central controller. As far as the scheduling process is concerned, the alterations of the internal configuration will only be reflected by the timing offers sent to the other modules, and, as a consequence, the other modules only have to react on these timing offers in the usual way without having to know the alterations that have been made.

As a result, the scheduling method offers a high flexibility in the engine configuration and is at the same time of a general applicability so that it can be used for a large variety of engine types and engine designs.

The term "module" as used herein refers not only to the engine subassemblies performing the task of the module but also to the associated control system which itself may be formed by hardware and/or software. Of course, it is the control system of the module that determines and sends the timing offer to the control system of another module, whereas it is the engine subassembly that delivers the output, e.g. a copy sheet, to an other engine subassembly.

When it was stated above that the scheduling process is "decentralized" this is meant primarily in a logical sense and not necessarily in a physical sense. Thus, it is possible within the scope of the invention that the control systems of the various modules are centralized in a single multi-processor control unit or even in a single processor. In the latter case, the control functions of the modules are implemented as software modules or subroutines. Then, when a module, i.e. a system subassembly is altered or replaced, this implies that the associated subroutine is also altered or replaced.

As an alternative, it is of course possible that the control systems of the various modules are configured as separate control units or processors which communicate with each other via a bus system. In this case, the control unit of an individual module may also be physically integrated into the corresponding engine subassembly. As an example, one may think of a sorter or a stapling device that is connected to the paper output of a copier and has its own control unit that is connected to the control unit of the copier.

In any case, the decentralized architecture has the advantage that maintenance and modification of the engine are greatly facilitated because the necessary interventions in the hardware and/or software of the scheduler are determined in a natural way by the structure of the modules and their interactions.

The invention further has the advantage that the scheduling process is inherently safe, because each timing offer has to be either accepted or rejected by the receiving module. This implies that the receiving module has to check whether the offered timing would lead to a conflict. As a result, a timing error will lead to a rejection of a timing offer and hence to a failure of the scheduling attempt but not to any damage to the engine subassemblies.

The requirement that at least one module of the apparatus does not need an input object from another module for performing a first processing action guarantees that the scheduling process will not be circular. The scheduling process can always be started with the module which does not depend on an input from another module so that all the information needed for issuing a timing offer is available in this module. Of course, this module might well depend upon an external input which could then be used to trigger the whole scheduling process. In the case that the engine is adapted to perform a variety of different tasks, it may depend on the task to be performed which of the modules fulfils the requirement that it does not need an input from another module.

More specific embodiments of the invention are specified in the dependent claims.

In the simplest case, the timing offer consists only of a single time value indicating the moment at which the interaction between the sending and the receiving module shall take place. The receiving module then has only the choice to accept or reject this offer. The scheduling attempt is successful only when all the timing offers issued by all of the modules are accepted by the respective receiving modules. If only one timing offer has been rejected, then the scheduling attempt has failed. When another scheduling attempt is triggered immediately after the first attempt has failed or after a certain delay time, there is a chance that the new attempt will be successful because the internal status of the various modules will have changed in the meantime.

The efficiency of the scheduling process can however greatly be enhanced by requiring that each timing offer specifies a set of time values, e.g. a certain time interval within which the interaction may take place from the viewpoint of the sending module. Then, the receiving module can accept the timing offer under the more general condition that the offered time interval or set includes at least one time point which will not lead to a conflict. The message with which the timing offer is accepted will then include an indication of this time point or the earliest one of these time points, and both modules will then allocate this time point to the interaction. Thus, the likelihood that the scheduling attempt is successful will be increased significantly. As a further extension of this concept, it is possible that a timing offer includes a plurality of time intervals.

In a complex machine capable of performing different kinds of tasks it will generally be the case that not all of the available modules are actually involved in a specific task. For complex machines it is generally advantageous to have an engine controller which analyzes a requested task, splits it up into subtasks to be performed by specific modules and selects the modules for performing the necessary actions. The engine controller will then send an allocate action request to the selected modules. Most of the modules will not be able to respond to this request immediately, because they have to wait for timing offers from other modules. However, at least one module that is not dependent on an input from other modules can respond immediately by sending a timing offer, a so called allocate forward message, to the module to which it has to deliver its output. This message will then enable the receiving module to calculate and send its own timing offer to yet another module, so that a cascade or allocate forward messages is triggered. This cascade will finally end at a terminal module, i.e. a module which either delivers its output to the outside world and not to another module, or takes up the output of its predecessor module (e.g. an internal sheet collector). This module then has the necessary information for finally allocating a time point to the or each interaction with the preceding module or modules, and it will indicate this time point to preceding module or modules in a so-called allocate backward message. This will again enable the preceding module to send an allocate backward message to its predecessor, so that a cascade of allocate backward message will roll back through the system and will finally reach the module which has sent the first allocate forward message. Then, in case of success, the timings for all actions have been allocated appropriately, and this is signalled to the engine controller.

Preferably, each module sends an allocate action reply message to the engine controller so that the engine controller has reliable and even redundant information on whether or not the scheduling process has been successful. The allocate action replies sent from each module to the engine controller may include the allocated timings of the respective actions, so that the whole timing schedule will be available in the engine controller. It should be noted however that the engine controller has not been involved in establishing this schedule.

When a module rejects a timing offer, it will also signal this to the engine controller, and all other modules will be commanded to abort the scheduling attempt.

When the timing offer is rejected, the corresponding allocate backward message preferably includes information on a time interval or time intervals in which the module is not ready for accepting the input. In a simplified practical embodiment the allocate backward message indicates the earliest time point after which the input can be accepted. The engine controller may then issue a retry action allocation request which is distinguishable from the first allocate action request and causes the modules to modify their timing offers in accordance with the time information received with the allocate backward messages. As a result, the new timing offer to be sent will have a significantly higher chance of being accepted.

The independent claims 8 and 10 specify a scheduler employing the above-described method and a sheet handling machine comprising such a scheduler, respectively.

Preferred embodiments of the invention will now be described in conjunction with the accompanying drawings, in which:
Fig. 1 is a simplified block diagram of a printer as an example of a modular machine to which the invention is applicable;
Fig. 2is a schematic view of two modules disposed along a paper path of the printer shown in Fig. 1;
Fig. 3is a diagram illustrating an example of a scheduling process according to the invention;
Fig. 4a timing diagram illustrating an example of internal status of the modules shown in Fig. 2;
Fig. 5a diagram similar to Fig. 3 but showing a scheduling attempt which is unsuccessful under the conditions illustrated in Fig. 4;
Fig. 6a diagram illustrating a successful scheduling process retried subsequent to the unsuccessful attempt shown in Fig. 5;
Fig. 7a diagram of a scheduling attempt which is unsuccessful because a module is blocked;
Fig. 8a schematic view of two modules disposed along a paper path;
Fig. 9a more detailed block diagram of the paper input module of the printer shown in Fig. 1; and
Fig. 10 is a block diagram of a duplex printer and illustrates messages exchanged between the various modules according to a modified embodiment of the scheduling process.

In the description below the invention, as defined by claims 1, 8 and 10, is explained for an electrophotographic printer.

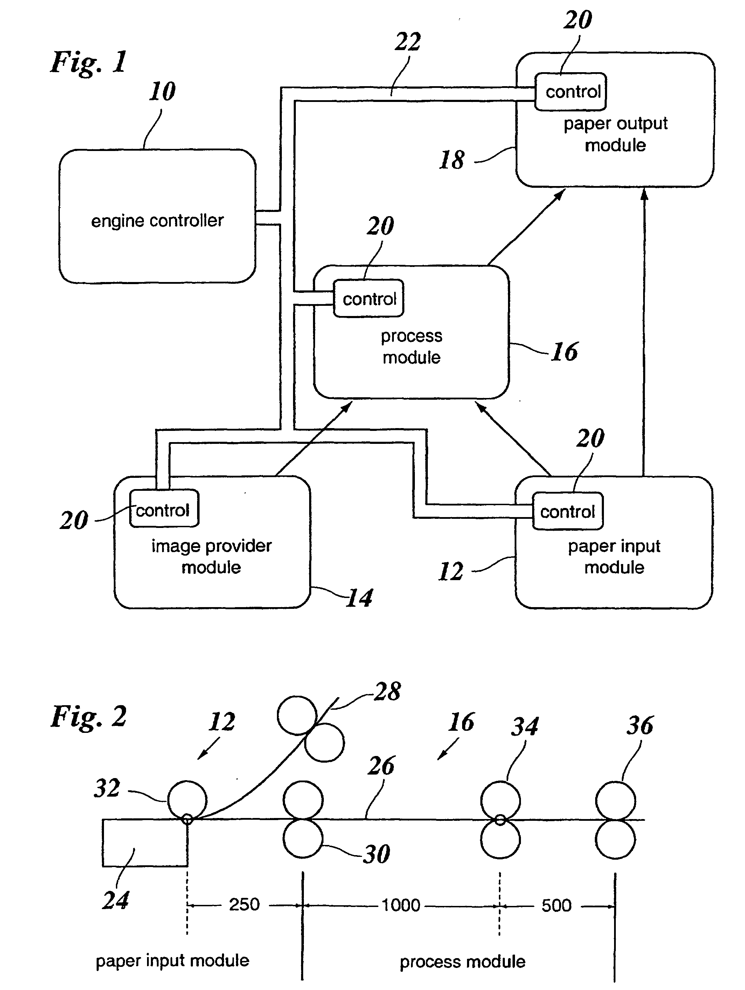

As is shown in Fig. 1, a printer has a modular architecture and comprises a control module 10 and four action modules, i.e. a paper input 12, an image provider 14, a process module 16 and a paper output 18. The action modules 12, 14, 16 and 18 may be considered as engine subassemblies which, in the shown embodiment, each include their own control unit 20, e.g. a processor. The control module 10 which is called "engine controller" and the control units 20 of the various action modules communicate with each other via a bus system 22 and, in combination, form a scheduler which schedules the tasks to be performed by the action modules.

The paper input module 12, which is also shown in Fig. 2, has the function to separate individual paper sheets from a stack 24 and to feed them either into a paper path 26 or into bypass 28. The paper path 26 leads through the process module 16 and further to the paper output 18, whereas the bypass 28 leads directly from the paper input to the paper output. This bypass may be used for example for inserting a blank separating sheet between two printed sheets.

The image provider 14 assembles image data for a page to be printed on the basis of information received from an external device, e.g. a host computer, and exposes a photoconductor belt (not shown) line by line with these image data.

In the process module 16 the image received as an input on the photoconductor belt (which has previously been prepared by charging with an electric surface charge), is developed with toner and is conveyed to a transfuse point where it is transferred onto a paper sheet supplied from the paper input 12 and is simultaneously fixed on the paper sheet. The paper sheet with the printed image thereon is then sent to the paper output module 18. The paper output module has the function to discharge the printed copy to, for example, a stapler which forms the output device of the printer.

Interactions between the various action modules are symbolized by arrows in Fig. 1. The output of the paper input module 12 is the paper sheet which is fed to the process module 16 along the paper path 26. From the viewpoint of the process module 16, this paper sheet forms an input received from the module 12. The interaction between the paper input and the process module can thus be described as the event in which the paper sheet is handed-over from the paper input to the process module. Similarly, the interaction between the image provider 14 and the process module 16 is the event that the first image line is exposed on the photoconductor belt.

It will be observed that the process module 16 receives two inputs, i.e. one from the paper input module 12 and one from the image provider 14, and delivers one output to the paper output module 18. The modules 12 and 14, however, do not receive an input from anyone of the other modules. Conversely, the paper output module 18 receives inputs from the process module 16 and from the paper input module 12 but does not deliver an output to anyone of the other modules.

A scheduler formed by the engine controller 10 and the control units 20 of the various action modules has to schedule the timings for the interactions between the action modules so that these modules will cooperate in the desired manner. Specifically, a unique time value has to be allocated to each interaction event. The appropriate interaction timings will depend on the internal status of the various action modules and on their internal timing constraints. As an example for such timing constraints, it can be seen in Fig. 2 that the paper input module 12 needs a certain time for feeding a sheet to the process module. In the shown example it is assumed that the time required for this amounts to 250 time units. The time units may be considered to be clock periods of a machine dock.

In Fig. 2, the boundary between the paper input module 12 and the process module 16 is defined by the nip of a pair of drive rollers 30. When the leading edge of the paper sheet enters into this nip, the responsibility for the further handling of the paper sheet is taken over by the process module 16. A separating roller 32 disposed on the stack 24 defines a reference point for the internal representation of positions and timings within the paper input module.

Similarly, the nip of a pair of rollers 34 within the process module defines a reference point for the process module. In an analogous way, a unique reference point is defined for each of the action modules.

The boundary or interaction point between the process module 16 and the paper output module 18 is defined by another pair of rollers 36 shown in Fig. 2. As is exemplified by the process module 16 in Fig. 2, each module typically has a timing constraint (1000) indicating the time needed for conveying the leading edge of the paper sheet (or image) from the input boundary (at 30) to the reference point (at 34), and another timing constraint (500) representing the time needed for conveying the leading edge from the reference point to the output interaction point (at 36). Another important timing constraint is the so-called time between two actions which is the total time interval required between the beginning of an action and the beginning of the next subsequent action. This time between two actions is composed of two time intervals. The first time interval is the time for executing the action, in the shown example represented by the time which it takes to move the complete sheet past the reference point. This first time interval also includes an extra time interval needed for changing the inter-sheet distance in case of a transport velocity change inside the module, such to avoid a collision between sheets when the velocity is decreased again further in the transport path. The second time interval is the required safety-gap between the end of the first action and the beginning of the next action.

An example of possible timing constraints for the action modules 12 to 18 is given table I.

**Table I**

| *Example timing constraints for the modules* | |
|---|---|
| | Time |
| *Paper input* | |
| Transfer time from separation point to process module | 250 |
| Transfer time from separation point to bypass output | 200 |
| Time between two actions | 400 |

| *Image provider* | |
|---|---|
| Image preparation | 50 |
| Print duration | 450 |
| Time between two actions | 450 |

| *Process* | |
|---|---|
| Paper transfer from paper input to transfuse point | 1000 |
| Image from printhead to transfuse point | 800 |
| Photoconductor preparation time | 150 |
| Paper transfer from transfuse point to paper output | 500 |
| Time between two actions | 490 |

| *Paper output* | |
|---|---|
| Paper transfer from process to stapler | 2500 |
| Paper transfer from bypass to stapler | 2300 |
| Time between two actions | 440 |

None of the timing constraints indicated above is stored in the engine controller 10, nor does this engine controller store any information on the internal status of the action modules. The timing constraints pertinent to the image provider and the information indicating the internal status of the image provider are stored only in the control unit 20 of the image provider 14. Similarly, the timing constraints and information on the internal status for the other action modules are stored only in the control units 20 associated with the respective module. As a consequence, the scheduling process requires a communication between the various control units 20 and the engine controller 10. A protocol for this communication is indicated below in Table II.

**Table II**

| *Communication Protocol* | | |
|---|---|---|
| message | parameters | values |
| | | |

| *from engine controller to action module* | | |
|---|---|---|
| allocate action request | xxActionSpecification | |
| | StartTime | |
| retry action allocation | xxActionSpecification | |
| | StartTime | |
| undo action allocation | ActionID | |
| undo all allocations | | |

| *from action module to engine controller* | | |
|---|---|---|
| allocate action reply | ReplyMessage | OK |
| | | NOT OK |
| | | BLOCK |
| | | STOP |
| | ActionStartTime | |
| | ActionEndTime | |
| unbloc allocation | | |

| *from action module to action module: forward* | | |
|---|---|---|
| allocate forward | ForwardMessage | OK |
| | | STOP |
| | InteractionStartTime | |
| | InteractionStopTime | |

| *from action module to action module: backward* | | |
|---|---|---|
| allocate backward | BackwardMessage | OK |
| | | NOT OK |
| | | STOP |
| | InteractionTime | |

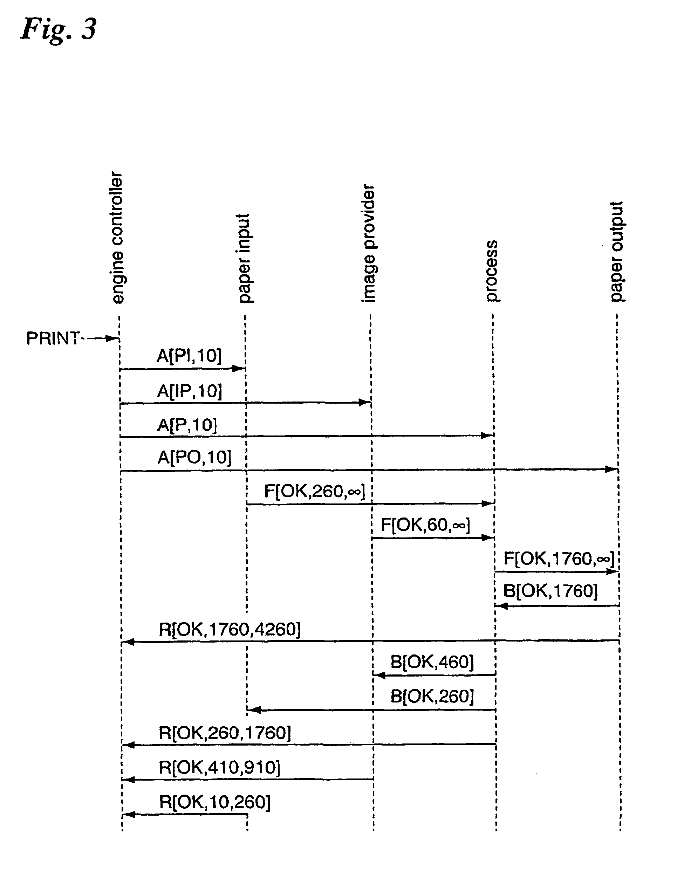

The meaning of the messages listed in Table II and the principle of the scheduling process will now be explained in conjunction with Fig. 3 which gives an example for a successful scheduling process utilizing the timing constraints indicated in Table I. The engine controller and the action modules (more specifically, their control units) are symbolized in Fig. 3 by vertical dashed lines. Messages exchanged between these modules are symbolized by horizontal arrows. It can be assumed that the messages occur in the sequence from the top to the bottom in Fig. 3.

The scheduling process starts when a printing instruction "PRINT" for printing a page is received by the engine controller. The engine controller then analyzes this printing instruction and determines which of the action modules are needed for the requested printing operation and which actions have to be performed by these modules. In general, the selection of modules and the actions performed by these modules may vary depending on the printing instruction. In the simplified example shown here, however, all four action modules are needed. This is why the engine controller sends an allocate action request A[ ] to each of the action modules. As is shown in Table II, this request has two parameters termed xxActionSpecification and StartTime. In the parameter xxActionSpecification, xx identifies the action module, i.e. either the paper input 12 (PI), the image provider 14 (IP), process module 16 (P) or the paper output 18 (PO). This parameter also specifies the type of action to be taken. For example, the action to be taken by the paper input 12 is in this case to deliver a sheet at its output port (roller pair 30) connected to the process module 16. Another possible action would have been to deliver a blank sheet at its output port in the by-pass 28, connected directly to the paper output module 18 via the bypass 28. The parameter StartTime indicates the earliest time at which the requested action is allowed to start. In the shown example the value of StartTime is 10 for each of the messages A[PI,10] sent to the paper input, A[IP,10] sent to the image provider, A[P,10] sent to the process module and A[PO,10] sent to the paper output.

These messages cause each of the action modules to calculate possible timings for the interactions on the basis of its own timing constraints and its internal status. For simplicity it is assumed here that the internal status of all action modules is "ready", so that they are all prepared to start their actions immediately.

For example, the control unit 20 of the paper input module 12 decides that it can immediately start with feeding a sheet from the stack 24 to the process module. However, since it was requested that the action should not start before the time 10, the paper input decides that the paper feed will be started at 10. Then it is derived from the internal constraints that it will take 250 time units until the sheet is handed-over to the process module. The earliest possible timing for the interaction with the process module is accordingly 260. Any later timing would of course also be possible, so that an allowed or proposed time interval for the interaction with the process module ranges from 260 to infinity. Accordingly, the paper input sends to the process module the allocate forward message F[OK, 260, ∞]. The value OK of the parameter forward message signalizes to the process module that the scheduling procedure shall be continued. The values 260 and ∞ for the parameters InteractionStartTime and InteractionStopTime, respectively, indicate a timing offer, i.e. the time interval within which the interaction can take place from the viewpoint of the paper input module.

Similarly, the image provider finds that its action should not start before the time 10, and it concludes from its internal constraints that it will take 50 time units to prepare the image data. The interaction with the process module is in this case the event that the first image line is exposed on the photoconductor belt Thus, the earliest possible time for the interaction is 10 + 50 = 60. Of course, the printing process will not be completed at this time, but it would still take another 450 time units until the last line of the image is printed. This, however, is not relevant for the process module. Thus the message sent to process module is F[OK, 60, ∞].

Having received the forward messages from the paper input and the image provider, the process module knows that the paper sheet will not be available at the nip of the rollers 30 before the time 260. It then will take another 1500 time units until the leading edge of the sheet has been transferred through the process module to the roller pair 36 which is the interaction point with the paper output module. Thus, the earliest possible time for the interaction between the process and the paper output is 260 + 1500 = 1760. A corresponding message F[OK, 1760, ∞] is sent to the paper output module.

The paper output module checks its internal status and finds that it will be ready to handle the sheet when it arrives at the earliest possible timing, i.e. at 1760. Therefore it accepts the timing offer from the process module and finally fixes the interaction time to the earliest moment, i.e. 1760. Thus, the allocate backward message sent back to the process module is B[OK, 1760]. The value "OK" for the parameter BackwardMessage means here that the timing offer has been accepted.

By inspecting its own timing constraints (Table I) the paper output module further finds that, from the interaction at 1760, it will still take another 2500 time units until the sheet is output to the stapler and thus leaves the engine. Accordingly the action of the output module will begin at 1760 and end at 1760 + 2500 = 4260. This information is transmitted to the engine controller by the allocate action reply message R[OK,1760,4260].

The process control module has been advised by the paper output module that the printed sheet is expected at the interaction point at 1760. From its own timing constraints (Table II) the process module knows that 800 + 500 = 1300 time units are needed for transferring the leading edge of the toner image on the photoconductor belt from the interaction point with the image provider to the transfuse point and then transferring the printed sheet from the transfuse point the interaction point with the paper output. By subtracting 1300 from 1760 it finds that the leading edge of the image should be received from the image provider at 460. A comparison with the interval (60, ∞) offered by the image provider shows that the scheduled interaction time is within the offered interval, so that the timing offer is accepted, at least as far as interaction with the image provider is concerned. Note that the photoconductor preparation time of 150 is much shorter than 460 and therefore does not form a constraint. Consequently, it plays no role in the schedule negotiations, although, of course, it must be scheduled. For the interaction with the paper input, the timing constraints of the process module require that the sheet is received 1500 time units before scheduled timing 1760, i.e. right at the beginning of the interval (260, ∞) offered by the paper input Thus, this offer is also be accepted. As a result, the messages B[OK, 460] and B[OK, 260] are sent to the image provider and the paper input, respectively. Further, a message R[OK, 260, 1760] indicating the start and end times of the action is sent from the process module to the engine controller.

The image provider now knows that the image has to be transferred to the process module at 460. Subtracting the preparation time of 50 gives 410 as the action start time for the image provider. Adding again the image preparation time 50 and the print duration 450 to the action start time gives the action end time 910. Thus the message R[OK, 410, 910] is sent to the engine controller. Likewise, the paper input module indicates its action start and end times to the engine controller by the message R[OK, 10, 260].
It will be observed that in the process described above each allocate action request sent by the engine controller is answered by an allocate action reply. Likewise, each forward message sent by any of the action modules is answered by a backward message. These rules are generally observed in the shown embodiment and assure a high level of redundance and safety. Thus, the engine controller positively knows from the four allocate action replies that the scheduling process has been successful. Likewise, each action module knows from the received message "OK" that the scheduling process has been successful and the allocated timings are really valid.

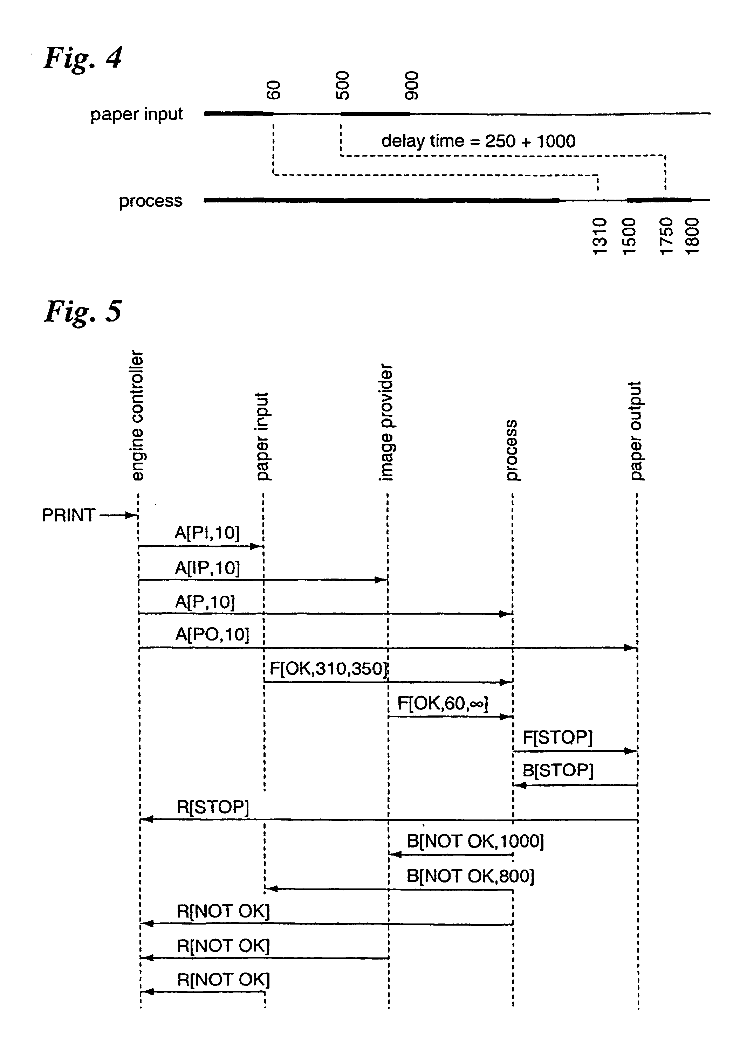

The case that a scheduling attempt cannot be successful due to the timing constraints and the internal status of one of the modules will now be discussed in conjunction with Figures 4 and 5. Fig. 4 illustrates a time axis for the status of the paper input and the status of the process module, respectively. Bold lines indicate time periods in which the modules are busy so that no further actions can be scheduled in these periods. Faint lines indicate the time periods which are free for scheduling further actions. Suppose, the paper input has free time between 60 and 500 and then again after 900. Since the delay time for the transfer of a sheet from the reference point of the paper input to the reference point of the process module is 1250, the free time of the paper input module corresponds to the interval between 1310 and 1750 on the time axis of the process module. Although the process module is ready for action at 1310, it is not ready in a time interval between 1500 and 1800. The reason may be that the process module is busy with an action that has been scheduled previously or that it is not operative in this interval because the photoconductor belt has a weld that is not useable for printing, and said weld passes the transfuse point during this time interval.

In Fig. 5 the allocate action requests are the same as in Fig. 3. However, paper input module 12 now finds that its action cannot start (at the reference point) before the time 60 and must be completed before the time 500. Table I shows that the time between two actions for the paper input module is 400, so that the action must not start later than at 100 in order to be completed in time. Thus, the time slot for starting the paper feed action (at the separating roller 32) is from 60 to 100. Adding the transfer time of 250 gives a time slot between 310 and 350 for the interaction with the process module. This is reflected by the message F[OK, 310, 350] in Fig. 5.

The message sent from the image provider to the process module is the same as in Fig. 3. The process module analyzes the message received from the paper input and finds that the leading edge of the sheet would reach the reference point of the process module (the transfuse point) at 1310, and it further concludes from its own internal state that the action would have to be completed already at 1500, so that only 290 time units would be available for the action. However, Table I shows that the time between two actions for the process module is 490. In case of the interaction time of 350 the time available for completing the process would be even shorter, so that none of the timings in the interval between 310 and 350 offered by the paper input is acceptable. Thus, the scheduling attempt has failed, and it is not necessary for the other modules to continue with this attempt. This is why a message F[STOP] is sent to the paper output module. The paper output module acknowledges this message by retransmitting a message B[STOP] to the process module. The paper output module also sends the reply message "STOP" to the engine controller in its allocate action reply.

The process module has found that the free time before 1500 (in relation to its own reference point) is not useable because the paper input is not capable of providing a sheet in time. It therefore concludes from its own internal status that an action cannot start before 1800. Since the transfer time between the interaction point with the image provider and the reference point of the process module is 800 time units, the earliest possible time for interaction with the image provider is at 1000. In case of the paper input the transfer time is 1000 and the earliest possible interaction time is 800. The message B[NOT OK, 1000] sent to the image provider means that the timing offer (60, ∞) of the image provider is rejected and any proposed interaction time before 1000 would also be rejected. It is to be noted that the reason for this rejection is a timing conflict between the paper input and the process module. However, this information is not relevant for the image provider. The message B[NOT OK, 800] sent to the paper input means that the timing offer (310, 350) of the paper input has been rejected and any proposed interaction time before 800 would also be rejected.

Finally, the process module, the image provider and the paper input report to the engine controller that the timing offers they have received or sent have been rejected. This are the contents of the messages R[NOT OK].

Again, the engine controller receives four reply messages all indicating this time that the scheduling attempt has failed. The difference between the reply messages "STOP^{"} and "NOT OK" is that in case of "NOT OK" a timing offer has been rejected and in the case of "STOP" a timing offer has not even been made. This makes it easier to trace back the reason for the failure and thus facilitates maintenance and debugging.

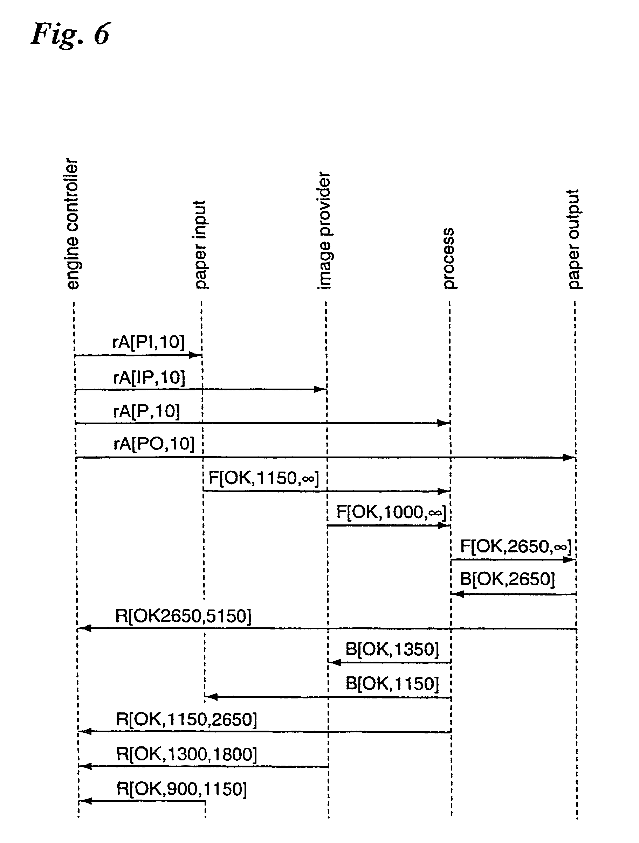

As is shown in Fig. 6, the engine controller may now deliver retry action allocation requests RA[ ] to the action modules. These requests are practically identical with the allocate action requests, but they indicate that now, the time limits indicated in the backward messages B[NOT OK, 1000] and B[NOT OK, 800] have to be observed.

Thus, the paper input module concludes that the earliest possible interaction time is 800, so that in view of the transfer time of 250 its feed action must not start before 550. However, Fig. 4 shows that the paper input is not ready between 500 and 900, so that the feed action can only start at 900 or later. Adding the transfer time of 250 again gives the forward message F[OK, 1150, ∞].

The image provider offers 1000 as the earliest possible interaction time, in accordance the time limit previously imposed by the process module. The rest of the procedure shown in Fig. 6 is equivalent to what has been shown in Fig. 3 and leads to a successful scheduling.

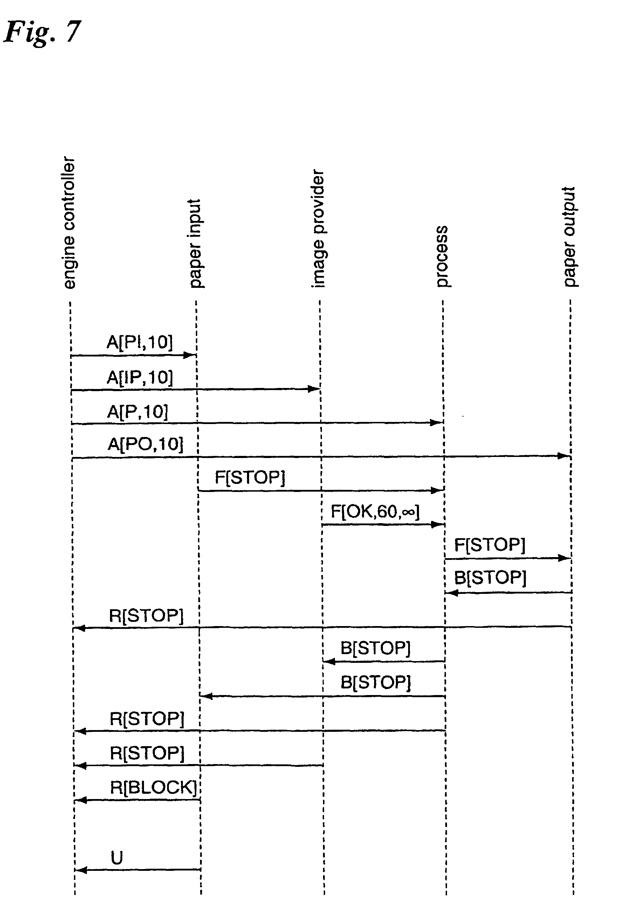

Fig. 7 shows another example for an unsuccessful scheduling attempt, but this time the reason is that the paper input tray is blocked because it is being refilled. In this case, the paper input module cannot send a timing offer because it does know when the refilling process which is performed manually by a user will be terminated. This is indicated by the forward message "STOP" in the allocate forward message sent to the process module. The process module reacts by sending a forward message "STOP" to the paper output Likewise, the regular forward message sent by the image provider is answered by a backward message "STOP". All the modules that have received a "STOP" message acknowledge this message in a corresponding backward message and send a corresponding report R[STOP] to the engine controller. Only the paper input module which is currently blocked reports the message R[BLOCK], thereby indicating that a retry action allocation request is not useful. When, finally, the refilling operation has been completed, and the paper input is no longer blocked, this is signalled to the engine controller by an unblock message U. Then, another allocate action request (not retry) can be issued by the engine controller.

The messages "undo action allocation" and "undo all allocations" indicated in Table II have only been added in order to enhance the functionality of the engine controller.

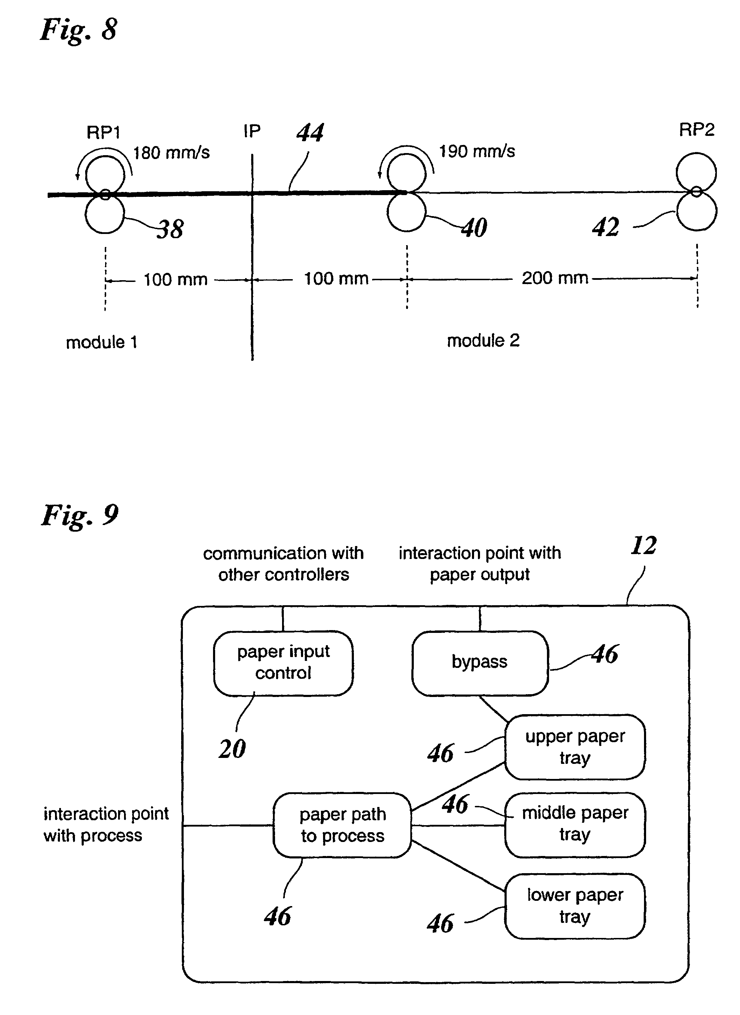

In the example shown in Fig. 2 it has been assumed that the interaction point or boundary between two modules is formed by a nip of two transport rollers 30 which belong to the downstream module (the process module in the given example) and determine the speed with which the sheet is transported as soon as the leading edge has been taken over. Sometimes it is convenient or even necessary however to select other locations for the module boundaries, i.e. the interaction points. An example is shown in Fig. 8 where the interaction point IP between two modules, module 1 and module 2, is located halfway between the last pair of rollers 38 of module 1 and the first pair of rollers 40 of module 2. In the shown example the pair of rollers 38 rotates with a circumferential speed of 180 mm/s, whereas the pair of rollers 40 rotates with a circumferential speed of 190 mm/s. As a result, the speed with which the leading edge of a sheet is moved from IP to the rollers 40, i.e. within module 2, is not determined by the components of module 2 but by the components (rollers 38) of module 1. In a certain sense, this violates the principle that all the modules should be autonomous entities which need only information on their internal status and timing constraints.

A similar problem occurs for the module 1. As is shown in Fig. 8, the reference point RP1 of the module 1 is defined by the rollers 38, whereas the reference point RP2 of the module 2 is defined by another pair of rollers 42. The length of a sheet 44 is indicated by a bold line, and it can be seen that this length is larger than the distance between the rollers 38 and 40. As a result the leading edge of the sheet reaches the nip between the rollers 40 before the trailing edge has left the reference point RP1.

It will be recalled that the time between two actions for the module 1 is determined among others by the time it takes to move the complete length of the sheet 44 past the reference point RP1. This time, however, depends not only on the speed of the rollers 38 but also on the speed of the rollers 40 of module 2, which again violates the principle that the modules should be independent from one another.

In more general terms, problems of this kind will always occur when the interaction between two modules is constituted by a transfer of an extended object (such as the sheet 44) from one module to the other. Then, in a certain sense, the transport system of the first module forms also part of the internal configuration of the second module and vice versa.

In order to cope with these problems and to preserve the independency of the modules, it is convenient to add to the control unit of module 1 a function asking its successor (module 2) to indicate the speed with which the object (sheet 44) is taken over. Likewise the control unit of module 2 will include a function asking its predecessor (module 1) to indicate the speed with which the object is supplied. These functions enable both modules to calculate their internal timing constraints correctly, irrespective of any possible changes of the transport speeds in the neighbouring module. Such functions therefore provide a higher flexibility in the configuration of the system and especially in the positioning of the interaction points.

Another possible extension of the concept described above is an engine configuration in which the modules and their associated controllers form a hierarchical structure. As an example, Fig. 9 shows a more detailed block diagram of the paper input module 12 that has already been shown in Fig. 1. In Fig. 9, the module 12 with its associated control unit 20 is broken down to a number of sub-modules 46 including for example upper, middle and lower paper trays, a bypass conveying system for feeding sheets from the upper paper tray directly to the paper output 18 (Fig. 1), and a conveying system for feeding sheets from any of the paper trays to the process module 16. In relation to the sub-modules 46 the control unit 20 has the same function as the engine controller 10 has in relation to the modules 12, 14, 16 and 18. Thus, the scheduling method that has been described above can also be applied internally of the module 12 for scheduling the actions of the sub-modules 46. When an allocate action request is transmitted from the engine controller 10 to the control unit 20 of the module 12, the control unit 20 will itself issue another allocate action request to the sub-modules 46 and will thus trigger a scheduling process within the module 12. The result of this scheduling process is available in the control unit 20 and can then be used to establish the allocate forward messages to be sent to the modules 16 and 18.

When the allocate forward messages sent by the various modules offer a choice of a plurality of possible interaction timings and leave the final decision to the receiving module as in the examples described above, then it is an important requirement that each module must receive only a single allocate backward message as a response. Would there be two different allocate backward message from two different modules and specifying different interaction times, then there would be a risk of conflict. This, however, does not generally exclude the possibility that a module delivers different outputs to different modules in one and the same action. As an example, one may think of a punching machine in which the action consists of punching an article out of a blank. A first output would then be the article that has been punched out and is delivered to a product handling module, and a second output might be the waste that is delivered to a waste handling module. In such a case, only one of the receiving modules, e.g. the handling system for the punched article can be allowed to allocate the final interaction timing, and the other module (the waste handling system) does not have any choice but must either accept or reject the allocated timing, in the latter case blocking the whole action.
Of course, in case said other module does not have limiting constraints, it will automatically accept the allocated timing.

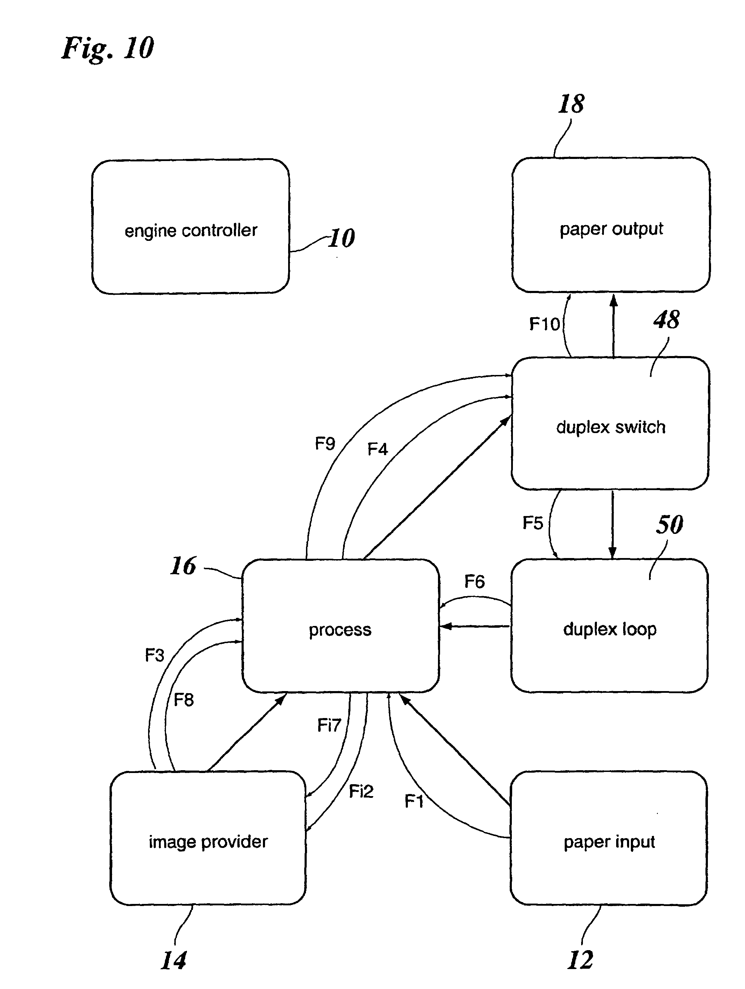

Another special consideration is required in those cases in which the chain of interactions between the various modules forms a closed loop, as may be the case for example in a duplex printer. Fig. 10 shows a block diagram of a duplex printer which, in comparison to Fig. 1, includes a duplex switch 48 and a duplex loop 50 as additional modules. Interactions between the modules are again represented by straight arrows. In the duplex mode, a copy sheet on which an image has been printed on one side is sent from process module 16 to the duplex switch 48 and from there to the duplex loop 50 where the sheet is reversed. The sheet is then again supplied to the process module 16 for printing an image on the second side, and is finally discharged to the paper output 18 via the duplex switch. Thus, the modules 16, 48 and 50 form a closed loop.

The image provider 14 must in this case provide two images to be printed on the first and the second side of the sheet supplied from the paper input. The timing at least for the second image depends on the timing at which the sheet is returned from the duplex loop 50 to the process module.

A possible way to handle this problem is shown in Fig. 10, where the forward messages exchanged between the various modules are indicated by curved arrows. Thus, the allocation procedure starts with an allocate forward message F1 sent from the paper input to the process module. In the embodiment shown in Figures 1 and 3, the image provider 14 was also treated as a module without input, i.e. a module which can independently send an allocate forward message to the process module. In Fig. 10 however, the image provider 14 is treated as a module which receives a virtual input from the process module. Thus, although the image provider does not actually receive an input from the process module, it nevertheless expects a forward message from the process module. This allows the image provider to respond to timing requirements imposed by the process module.

In response to the allocate forward message F1 the process module sends a so-called indicate forward message Fi2 to the image provider. This message indicates a time interval in which the process module is ready to receive an image from module 14. Then, the image provider 14 sends an allocate forward message F 3 to the process module and makes a timing offer consistent with the indicate forward message Fi2. Allocate forward messages F4 and F5 are then passed on from the process module to the duplex switch 48 and from there to the duplex loop 50, and another allocate forward message F6 is sent back to the process module. Thereupon, the process module sends another indicate forward message Fi7 to the image provider in order to indicate a time interval in which the process module will be ready for receiving the second image. The image provider then issues an allocate forward message F8 to the process module which forwards an allocate forward message F9 to the duplex switch, and finally the duplex switch sends an allocate forward message F10 to the paper output 18. As before, each allocate forward message will be answered by an allocate backward message. A reply to the indicate forward messages Fi2 and Fi7 is not necessary because these messages are implied by the allocate forward messages F3 and F8.

The process shown in Fig. 10 may of course be extended to the scheduling of multipage jobs where more than two pages are printed on a plurality of duplex sheets.

Typically, the duplex loop of a printer is capable of handling a plurality of sheets at a time. In this case, the number of sheets included in one and the same scheduling process may be roughly equal to the number of sheets that the duplex loop can handle.

As an alternative to the solution shown in Fig. 10, it is possible that the image provider 14 immediately sends the allocate forward messages F3 and F8 without waiting for any indicate forward messages. Then, the allocate forward message F8 would be stored in the process module until the message F6 is received from the duplex loop. However, the procedure shown in Fig. 10 has the advantage that, in particular in more complex systems, the burden on the control unit of the process unit 16 is reduced because the allocate forward messages from the image provider 14 are received "on demand".

Yet another solution would be that the operation of printing a duplex page is split-up into two separate printing operations, one for each side of the sheet, and a separate scheduling process is triggered by the engine controller 10 for each of these printing processes.

When the chain of interactions between the modules comprises a closed loop, as in a duplex printer, it can, in general, not be taken for granted that the result of the scheduling processes described above will represent an optimum in terms of productivity. If, for example, simplex copies and duplex copies are printed in mixed order, it may happen that the scheduling process leads to a result in which some sheet locations in the duplex loop and/or on the photoconductor belt are left empty, although they could well have been used for simplex copies to be printed.

In view of this problem it may be preferable to specify a plurality of sequences in which the images are sent from the image provider 14 to the process module 16 and to conduct separate scheduling processes for all these sequences. Then the sequence which has led to the best result, i.e. to the shortest overall time, will be adapted. Normally, it will of course be required that the printed sheets are discharged by the paper output 18 in a predetermined order. It will then be the responsibility of the paper output module 18 to check whether this requirement is fulfilled and to reject all scheduling attempts which lead to the wrong order of sheets.

Although only specific embodiments of the invention have been described above, a person skilled in the art will understand that various modifications are possible without departing from the scope of the invention as defined in the appended claims.

## Claims

1. Time scheduling method for a modular processing apparatus, said apparatus including a set of processing modules (12, 14, 16, 18) each for performing a particular processing action, wherein, for a chain of processing actions to be scheduled, interaction between the modules (12, 14, 16, 18) involved in said chain of actions comprises an output object from one processing module being delivered as an input object to another processing module, the processing apparatus comprising at least one processing module (12) for performing a first processing action that does not need an input object from another processing module,
the method comprising the allocation of a time to each processing action to be performed by the processing modules on the basis of information on the current status and timing constraints of the respective processing modules,
**characterized in that** each processing module sends a timing offer (F[OK, ..., ...]) to the processing module to which its process output has to be delivered and receives in reply from that processing module a message (B[OK, ...]; B[NOT OK, ...]) accepting or rejecting the timing offer, the timing offer sent being based on the internal status and timing constraints of the sending processing module and, if an input object from another processing module is needed by the sending processing module, on a timing offer received from that other processing module.

2. Method according to claim 1, wherein the timing offer comprises a set of possible timings for the interaction and the message (B[OK, ...]) accepting this timing offer includes a specific timing selected out of the set.

3. Method according to claim 1 or 2, wherein a message (B[NOT OK, ...]) rejecting a timing offer includes information on timings at which the interaction is not possible, and the processing module receiving this messages sends another timing offer on the basis of that information.

4. Method according to any of the preceding claims, wherein, when a processing module rejects a timing offer, all the other processing modules are instructed to abort the scheduling process and to wait for an instruction for a new scheduling attempt.

5. Method according to any of the preceding claims, wherein, when a processing module involved in a particular chain of processing actions to be scheduled is in an inoperative status for unpredictable time period, all the other processing modules involved are instructed to abort the scheduling process, and a new scheduling process for said particular chain of processing actions is started only after the processing module that has been inoperative sends a signal (U) indicating that it is operative again.

6. Method according to any of the preceding claims, wherein all the processing modules report to an engine controller (10) whether or not the scheduling process has been successful and, in case of success, the timings that have been allocated to their actions.

7. Method according to any of the preceding claims, for a processing apparatus in which the processing modules and the interactions therebetween define a loop (16, 48, 50), wherein a processing module (16), at which a first input object returned from the loop is combined with a second input processing entering into the loop from a preceding processing module (14), reacts on a timing offer (F6) from the processing module (50) returning the input object from the loop by sending a message (Fi7) to the preceding processing module (14), whereupon the preceding processing module (14) sends a timing offer (F8) for the second input object.

8. Scheduler for performing the time scheduling method according to any of the claims 1 to 7, comprising a plurality of control units (20) respectively associated with each of the processing modules (12, 14, 16, 18), each control unit (20) being adapted to detect and/or store the internal status and the timing constraints of its associated processing module and to send a timing offer to the control unit of the processing module to which its process output is to be sent,
each control unit (20) being further adapted to check whether a timing offer received from another process module is compatible with its own status and timing constraints, and as the case may be, with timing offers received from other process modules, and to send a message accepting or rejecting the timing offer back to the process module from which it has been sent.

9. Scheduler according to claim 8, wherein the control units (20) are formed by separate processors that are linked together by a bus system (22).

10. Sheet handling apparatus **characterized by** a scheduler according to claim 8 or 9.

11. Sheet handling apparatus according to claim 10, **characterized in that** it comprizes a loop (16, 48, 50) for handling duplex copies.

## Patentansprüche

1. Zeitplanungsverfahren für ein modulares Verarbeitungsgerät, welches Gerät einen Satz von Verarbeitungsmodulen (12, 14, 16, 18) aufweist, die jeweils zur Ausführung einer bestimmen Verarbeitungsaktion dienen, wobei, für eine Kette von zu planenden Verarbeitungsaktionen, die Interaktion zwischen den in dieser Kette von Aktionen betroffenen Modulen (12, 14, 16, 18) einschließt, daß ein Outputobjekt von einem Verarbeitungsmodul als ein Inputobjekt an ein anderes Verarbeitungsmodul übergeben wird, wobei das Verarbeitungsgerät wenigstens ein Verarbeitungsmodul (12) zur Ausführung einer ersten Verarbeitungsaktion aufweist. die kein Inputobjekt von einem anderen Verarbeitungsmodul benötigt,
wobei das Verfahren die Zuweisung eines Zeitpunkts zu jeder von den Verarbeitungsmodulen auszuführenden Verarbeitungsaktion einschließt, auf der Grundlage von Information über den aktuellen Status und Zeitbeschränkungen der jeweiligen Verarbeitungsmodule,
**dadurch gekennzeichnet, daß** jedes Verarbeitungsmodul einen Zeitvorschlag (F[OK, ..., .... ]) an das Verarbeitungsmodul sendet, an das sein Prozeßoutput zu übergeben ist, und als Antwort von diesem Verarbeitungsmodul eine Nachricht (B[OK, ... ]; B[NICHT OK, ... ]) empfängt, die den Zeitvorschlag akzeptiert oder verwirft, wobei der Zeitvorschlag auf dem internen Status und Zeitbeschränkungen des sendenden Verarbeitungsmoduls und, wenn von dem sendenden Verarbeitungsmodul ein Inputobjekt von einem anderen Verarbeitungsmodul benötigt wird, auf einem Zeitvorschlag basiert, der von dem anderen Verarbeitsmodul empfangen wird.

2. Verfahren nach Anspruch 1, bei dem der Zeitvorschlag einen Satz von möglichen Zeitpunkten für die Interaktion enthält und die Nachricht (B[OK, ... ]), mit der dieser Zeitvorschlag akzeptiert wird, einen bestimmten Zeitpunkt enthält, der aus dieser Menge ausgewählt ist.

3. Verfahren nach Anspruch 1 oder 2, bei dem eine Nachricht (B[NICHT OK, ... ]), die einen Zeitvorschlag verwirft, Information über Zeitpunkte enthält, zu denen die Interaktion nicht möglich ist, und das Verarbeitungsmodul, das diese Nachricht empfängt, auf der Basis dieser Information einen anderen Zeitvorschlag sendet.

4. Verfahren nach einem der vorstehenden Ansprüche, bei dem, wenn ein Verarbeitungsmodul einen Zeitvorschlag verwirft, all die anderen Verarbeitungsmodule veranlaßt werden, den Planungsprozeß abzubrechen und auf einen Befehl für einen neuen Planungsversuch zu warten.

5. Verfahren nach einem der vorstehenden Ansprüche, bei dem, wenn ein Planungsmodul, das an einer speziellen Kette von zu planenden Verarbeitungsaktionen beteiligt ist, sich für eine unvorhersagbare Zeitspanne in einem nicht betriebsbereiten Zustand befindet, alle anderen betroffenen Verarbeitungsmodule veranlaßt werden, den Planungsprozeß abzubrechen, und ein neuer Planungsprozeß für diese spezielle Kette von Verarbeitungsaktionen erst gestartet wird, nachdem das Verarbeitungsmodul, das nicht betriebsbereit war, ein Signal (U) sendet, das angibt, daß es wieder betriebsbereit ist.

6. Verfahren nach einem der vorstehenden Ansprüche, bei dem all die Verarbeitungsmodule an eine Maschinensteuerung (10) berichten, ob der Planungsprozeß erfolgreich war oder nicht und, im Fall es Erfolgs, die Zeitpunkte, die ihren Aktionen zugewiesen worden sind.

7. Verfahren nach einem der vorstehenden Ansprüche, für ein Verarbeitungsgerät, bei dem die Verarbeitungsmodule und die Interaktionen zwischen ihnen eine Schleife (16, 48, 50) bilden, wobei ein Verarbeitungsmodul (16), bei dem ein erstes Inputobjekt, das aus der Schleife zurückkehrt, mit einem zweiten Input kombiniert wird, der von einem vorangehenden Verarbeitungsmodul (14) in die Schleife eintritt, auf einen Zeitvorschlag (F6) von dem Verarbeitungsmodul (50), das das Inputobjekt aus der Schleife zurückführt, dadurch reagiert, daß es eine Nachricht (Fi7) an das vorangehende Verarbeitungsmodul (14) sendet, woraufhin das vorangehende Verarbeitungsmodul (14) einen Zeitvorschlag (F8) für das zweite Inputobjekt sendet.

8. Planer zur Durchführung des Zeitplanungsverfahrens nach einem der Ansprüche 1 bis 7, mit einer Vielzahl von Steuereinheiten (20), die jedem der Verarbeitungsmodule (12, 14, 16, 18) einzeln zugeordnet sind, wobei jede Steuereinheit (20) dazu ausgebildet ist, den internen Status und die Zeitbeschränkungen seines zugeordneten Verarbeitungsmoduls zu detektieren und/oder zu speichern und einen Zeitvorschlag an die Steuereinheit des Verarbeitungsmoduls zu senden, an den es seinen Prozeßoutput zu senden hat,
wobei jede Steuereinheit (20) weiter dazu ausgebildet ist, zu prüfen, ob ein von einem anderen Verarbeitungsmodul empfangener Zeitvorschlag mit seinem eigenen Status und seinen eigenen Zeitbeschränkungen und gegebenenfalls mit Zeitvorschlägen kompatibel ist, die von anderen Verarbeitungsmodulen empfangen werden, und eine Nachricht, die den Zeitvorschlag akzeptiert oder verwirft, an das Verarbeitungsmodul zurück zu senden, von dem er gesendet wurde.

9. Planer nach Anspruch 8, bei dem die Steuereinheiten (20) durch separate Prozessoren gebildet werden, die durch ein Bussystem (22) miteinander verbunden sind.

10. Blatthandhabungsvorrichtung, **gekennzeichnet durch** einen Planer nach Anspruch 8 oder 9.

11. Blatthandhabungsvorrichtung nach Anspruch 10, **dadurch gekennzeichnet, daß** sie eine Schleife (16, 48, 59) zur Handhabung von Duplexkopien aufweist.

## Revendications

1. Procédé de programmation de temps pour un appareil de traitement modulaire, ledit appareil incluant un ensemble de modules de traitement (12, 14, 16, 18) chacun effectuant une action de traitement particulière, dans lequel, pour une chaîne d'actions de traitement à programmer, une interaction entre les modules (12, 14, 16, 18) impliqués dans ladite chaîne d'actions comprend un objet de sortie d'un module de traitement à délivrer comme objet d'entrée à un autre module de traitement, l'appareil de traitement comprenant au moins un module de traitement (12) pour effectuer une première action de traitement qui ne nécessite pas un objet d'entrée d'un autre module de traitement, le procédé comprenant l'affectation d'un temps à chaque action de traitement à effectuer par les modules de traitement sur la base d'une information sur l'état actuel et les contraintes de minutage des modules de traitement respectifs
**caractérisé en ce que** chaque module de traitement envoie une offre de minutage (F[OK, ..., ...]) au module de traitement auquel sa sortie de processus doit être délivrée et reçoit en réponse de ce module de traitement un message (B[OK, ...]); (B[NOT OK, ...]) acceptant ou rejetant l'offre de minutage, l'offre de minutage envoyée étant basée sur l'état interne et les contraintes de minutage du module de traitement d'envoi et, si un objet d'entrée d'un autre module de traitement est nécessité par le module de traitement d'envoi, sur une offre de minutage reçue de cet autre module de traitement.

2. Procédé selon la revendication 1, dans lequel l'offre de minutage comprend un ensemble de minutages possibles pour l'interaction et le message (B[OK, ...]) acceptant cette offre de minutage inclut un minutage spécifique choisi hors de l'ensemble.

3. Procédé selon la revendication 1 ou 2, dans lequel un message (B[NOT OK, ...]) rejetant une offre de minutage inclut une information sur des minutages pour lesquels l'interaction n'est pas possible, et le module de traitement recevant ces messages envoie une autre offre de minutage sur la base de cette information.

4. Procédé selon l'une quelconque des revendications précédentes, dans lequel, quand un module de traitement rejette une offre de minutage, tous les autres modules de traitement reçoivent l'ordre de faire avorter le processus de programmation et pour attendre une instruction pour une nouvelle tentative de programmation.

5. Procédé selon l'une quelconque des revendications précédentes, dans lequel, quand un module de traitement impliqué dans une chaîne particulière d'actions de traitement à programmer est dans un état non opérationnel pendant une période de temps non prévisible, tous les autres modules de traitement impliqués reçoivent l'ordre de faire avorter le processus de programmation, et un nouveau processus de programmation pour ladite chaîne particulière d'actions de traitement est démarré seulement après envoi par le module de traitement qui était non opérationnel d'un signal (U) indiquant qu'il est à nouveau opérationnel.

6. Procédé selon l'une quelconque des revendications précédentes, dans lequel tous les modules de traitement signalent à une unité de commande de machine (10) si le processus de programmation a réussi ou non et, dans le cas d'une réussite, les minutages qui ont été affectés à leurs actions.

7. Procédé selon l'une quelconque des revendications précédentes pour un appareil de traitement dans lequel les modules de traitement et les interactions entre eux définissent une boucle (16, 48, 50), dans lequel un module de traitement (16), au niveau duquel un premier objet d'entrée renvoyé par la boucle est combiné avec un deuxième traitement d'entrée entrant dans la boucle à partir d'un module de traitement précédent (14), réagit à une offre de minutage (F6) du module de traitement (50) renvoyant l'objet d'entrée de la boucle en envoyant un message (Fi7) au module de traitement précédent (14), grâce à quoi le module de traitement précédent (14) envoie une offre de minutage (F8) destinée au deuxième objet d'entrée.

8. Programmateur pour effectuer le procédé de programmation de temps selon l'une quelconque des revendications 1 à 7, comprenant une pluralité d'unités de commande (20) associées respectivement à chacun des modules de traitement (12, 14, 16, 18), chaque unité de commande (20) étant adaptée pour détecter et/ou stocker l'état interne et les contraintes de minutage de son module de traitement associé et pour envoyer une offre de minutage à l'unité de commande du module de traitement auquel sa sortie de traitement doit être envoyée,
chaque unité de commande (20) étant de plus adaptée pour vérifier si une offre de minutage reçue depuis un autre module de traitement est compatible avec son propre état et ses contraintes de minutage et comme ça peut être le cas, avec des offres de minutage reçues d'autres modules de traitement, et pour renvoyer un message acceptant ou rejetant l'offre de minutage au module de traitement par lequel elle a été envoyée.

9. Programmateur selon la revendication 8, dans lequel les unités de commande (20) sont constituées de processeurs distincts qui sont liés ensemble par un système de bus (22).

10. Appareil de manipulation de feuilles **caractérisé par** un programmateur selon la revendication 8 ou 9.

11. Appareil de traitement de feuilles selon la revendication 10, **caractérisé en ce qu'**il comprend une boucle (16, 48, 50) pour manipuler des copies duplex.
